(19) Europäisches Patentamt
European Patent Office
Office européen des brevets

(11) **EP 2 911 264 A1**

(12) **EUROPÄISCHE PATENTANMELDUNG**

(43) Veröffentlichungstag:
**26.08.2015   Patentblatt 2015/35**

(21) Anmeldenummer: **14156254.6**

(22) Anmeldetag: **21.02.2014**

(51) Int Cl.:
$H02J\ 5/00$ (2006.01)    $B60L\ 11/18$ (2006.01)
$G05F\ 3/02$ (2006.01)    $H02J\ 7/02$ (2006.01)
$H02J\ 17/00$ (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Brusa Elektronik AG**
**9466 Sennwald (CH)**

(72) Erfinder: **Krause, Axel**
**9650 Nesslau (CH)**

(74) Vertreter: **Patentbüro Paul Rosenich AG**
**BGZ**
**9497 Triesenberg (LI)**

(54)   **Ladeschaltung für einen Akkumulator mit erhöhter Ausgangsspannung**

(57)   Die Erfindung betrifft eine Ladeschaltung (1, 1a.. 1c) für einen Akkumulator (A) mit einem Transformator (T), einem an einer Sekundärspule (L2) des Transformators (T) über erste gegenüberliegende Brückenpunkte (P11, P21) angeschlossenen Brückengleichrichter (B) und einem mit zweiten gegenüberliegenden Brückenpunkten (P12, P22) des Brückengleichrichters (B) verbundenen Ladeausgang (a). Zwischen einen ersten Brückenpunkt (P11) und einen zweiten Brückenpunkt (P12) ist ein erster Kondensator (C1) geschaltet. Weiterhin ist zwischen diesen ersten Brückenpunkt (P11) und dem anderen zweiten Brückenpunkt (P22) ein zweiter Kondensator (C2) geschaltet. Darüber hinaus betrifft die Erfindung ein Mobilteil (MT) für eine kontaktlose Ladeschaltung, ein Kraftfahrzeug (2) mit einem Mobilteil (MT), ein Kraftfahrzeug-Ladesystem (3) sowie eine Verwendung der Ladeschaltung (1, 1a..1c).

FIG 1

EP 2 911 264 A1

**Beschreibung**

Die Erfindung betrifft eine Ladeschaltung für einen Akkumulator, welche einen Transformator, einen an einer Sekundärspule des Transformators über erste gegenüberliegende Brückenpunkte angeschlossenen Brückengleichrichter und einen mit zweiten gegenüberliegenden Brückenpunkten des Brückengleichrichters verbundenen Ladeausgang umfasst. Weiterhin betrifft die Erfindung ein Mobilteil mit den sekundärseitigen Bestandteilen einer Ladeschaltung der genannten Art sowie ein Kraftfahrzeug mit einem solchen Mobilteil. Zudem betrifft die Erfindung ein Kraftfahrzeug-Ladesystem mit einer solchen Ladeschaltung und einem solchen Kraftfahrzeug. Schliesslich betrifft die Erfindung die Verwendung eines Mobilteils respektive einer Ladeschaltung der genannten Art in einem Ladesystem für Kraftfahrzeuge.

Eine Ladeschaltung, ein Mobilteil, ein Kraftfahrzeug, ein Ladesystem sowie eine Verwendung, so wie sie eingangs erwähnt werden, sind grundsätzlich bekannt. Die Ladeschaltung wandelt eine Eingangswechselspannung in an sich bekannter Art in eine Ausgangsgleichspannung um, wodurch ein am Ausgang angeschlossener Akkumulator geladen werden kann. Die folgenden Erwägungen betreffen insbesondere Ladeschaltungen mit einer veränderlichen beziehungsweise variablen Kopplung zwischen deren Primärseite und deren Sekundärseite, welche beispielsweise bei induktiven respektive kontaktlosen Ladeschaltungen auftreten kann.

Die Ausgangsspannung der Ladeschaltungen ist generell proportional zur Feldstärke und dem Kopplungsfaktor. Eine induktive Ladeschaltung sollte bei gegebener Nennleistung daher auf die maximal vorkommende Ausgangsspannung bei kleinstem Kopplungsfaktor dimensioniert werden. Diese maximale Ausgangsspannung tritt vor allem in der Ladeschlussphase auf, wenn der Akkumulator beziehungsweise die Batterie fast vollgeladen ist. Insbesondere betrifft diese Dimensionierung die Primärseite der Ladeschaltung. Wird von der Ladeschaltung eine kleinere Ausgangsgleichspannung gefordert, was während des grössten Teils der Ladezeit der Fall ist, oder ist die Kopplung besser als erwartet, so ist die Ladeschaltung für diese konkreten Arbeitspunkte überdimensioniert.

Eine Aufgabe der vorliegenden Erfindung ist es somit, eine verbesserte Ladeschaltung, ein verbessertes Mobilteil, ein verbessertes Kraftfahrzeug, ein verbessertes Kraftfahrzeug-Ladesystem sowie eine verbesserte Verwendung der Ladeschaltung anzugeben. Insbesondere soll bei gleichbleibender Leistung eine hohe Ausgangsspannung erzeugt werden können, ohne dass die Feldstärke und damit der Eingangsstrom in gleichem Mass ansteigen muss.

Die Aufgabe wird durch die Merkmale der unabhängigen Ansprüche gelöst. Vorteilhafte Weiterbildungen sind in den Figuren und in den abhängigen Patentansprüchen dargelegt.

Gemäss der Erfindung umfasst eine Ladeschaltung der eingangs genannten Art zusätzlich einen zwischen einen ersten Brückenpunkt und einen zweiten Brückenpunkt geschalteten ersten Kondensator und einen zwischen diesen ersten Brückenpunkt und dem anderen zweiten Brückenpunkt geschalteten zweiten Kondensator.

Durch die zusätzlichen Kondensatoren ergibt sich eine tiefere effektive Lastspannung, wobei die Kondensatoren vor allem bei grossen Ausgangsspannungen wirksam sind, bei kleiner Ausgangsspannung jedoch schnell umgeladen werden und die effektive Lastspannung somit weniger reduzieren. Dadurch wird das Verhältnis von Maximalwert zu Minimalwert der Spannung an der Sekundärspule des Transformators gegenüber dem Verhältnis von Maximalwert zu Minimalwert der Ausgangsgleichspannung reduziert. Im Endeffekt erreicht die Ladeschaltung bei gleicher Leistung und Kopplung gegenüber dem Stand der Technik höhere Ausgangsspannungen.

Im Speziellen ist die Ladeschaltung kontaktlos ausgebildet und weist einen die sekundärseitigen Bestandteile einer Ladeschaltung umfassenden Mobilteil und einen davon getrennten die primärseitigen Bestandteile der Ladeschaltung umfassenden Stationärteil auf.

Bei einer kontaktlosen Ladeschaltung treten die Vorteile der Erfindung besonders dann hervor, wenn die Kopplung zwischen der Primärspule und der Sekundärspule variieren kann, das heisst wenn die Position der Primärspule zur Sekundärspule beim Ladevorgang aufgrund der Bauweise des betriebenen Geräts nicht vorgegeben ist. Durch die erfindungsgemässen Massnahmen ergeben sich Reserven, welche einen verlustarmen Ladevorgang auch bei nicht optimal zueinander ausgerichteter Primärspule und Sekundärspule ermöglichen.

Weiterhin wird die Aufgabe der Erfindung mit einem Kraftfahrzeug gelöst, das einen Mobilteil der genannten Art umfasst sowie einen mit dem Ladeausgang des Mobilteils verbundenen Akkumulator, welcher zumindest teilweise dem Antrieb des Kraftfahrzeugs dient.

Zudem wird die Aufgabe der Erfindung mit einem Kraftfahrzeug-Ladesystem gelöst, das ein Kraftfahrzeug der genannten Art sowie ein die primärseitigen Bestandteile der Ladeschaltung umfassendes Stationärteil aufweist, das ausserhalb dieses Kraftfahrzeugs angeordnet ist.

Schliesslich wird die Aufgabe der Erfindung durch eine Verwendung eines erfindungsgemässen Mobilteils gelöst, wobei der Mobilteil sowie ein mit dem Ladeausgang des Mobilteils verbundener Akkumulator, welcher zumindest teilweise dem Antrieb des Kraftfahrzeugs dient, innerhalb des Kraftfahrzeugs angeordnet sind.

Auch wird die Aufgabe der Erfindung durch eine Verwendung einer erfindungsgemässen Ladeschaltung in einem Kraftfahrzeug-Ladesystem für Kraftfahrzeuge gelöst, wobei der Mobilteil sowie ein mit dem Ladeausgang des Mobilteils verbundener Akkumulator, welcher zumindest teilweise dem Antrieb des Kraftfahrzeugs dient, innerhalb des Kraftfahrzeugs angeordnet sind und der Stationärteil stationär ausserhalb dieses Kraftfahrzeugs angeordnet ist.

Generell kann die vorgestellte Ladeschaltung für beliebige induktive beziehungsweise kontaktlose Ladesysteme mit einem Stationärteil und einem Mobilteil eingesetzt werden. Bei einer Verwendung der vorgestellten Ladeschaltung in einem Ladesystem für Kraftfahrzeuge treten die Vorteile der Erfindung aber besonders hervor, da die Kopplung zwischen Primärspule und Sekundärspule einerseits nicht beliebig gesteigert werden kann, andererseits je nach Position des Fahrzeugs zur Primärspule variieren kann.

Beim induktiven Laden von Elektrofahrzeugen über im Boden befindliche Induktionsschleifen können generell zwei Kategorien unterschieden werden, nämlich das stationäre Laden des parkenden Fahrzeugs und das mobile Laden während der Fahrt über in der Fahrbahn verlegte Induktionsleitungen.

Über Induktionswicklung im Boden (Primärspule) wird ein magnetisches Wechselfeld im Frequenzbereich 25...150kHz (vorzugsweise mit 85kHz) erzeugt, sobald das System ein ladebereites Kraftfahrzeug erkennt. Ein Teil dieses Feldes durchdringt eine "Empfängerspule" (Sekundärspule) im Fahrzeug und ermöglicht so eine kontaktlose Energieübertragung wie in einem Transformator.

Je besser die Kopplung zwischen der im Boden verlegten Induktionsschleife und der fahrzeugseitigen Empfängerspule ist, desto kleiner ist die erforderliche "Blindleistung" zur Erzeugung des Feldes. Bei gegebenem Abstand zwischen Fahrbahn und Fahrzeug-Unterboden wird die Kopplung umso besser, je grösser der mittlere Durchmesser der Schleife bzw. der Abstand der in der Fahrbahn verlegten Leitungen ist.

Damit nimmt aber gleichzeitig der ausserhalb des Fahrzeugs und somit nicht nutzbare Teil des magnetischen Dipolfeldes stark zu. Insbesondere bei hohen Übertragungsleistungen können dann in zugänglichen Bereich neben dem Fahrzeug die zulässigen Grenzwerte für magnetische Wechselfelder deutlich überschritten werden.

Das Fahrzeug-Innere ist dagegen durch die Blechkarosserie magnetisch hervorragend abgeschirmt, sodass hier keine Grenzwert-Überschreitung zu befürchten ist. Insbesondere bei hohen Leistungen und Frequenzen können aber im Karosserieblech Wirbelströme erzeugt werden, welche den Fahrzeug-Unterboden allenfalls unzulässig erwärmen und den Wirkungsgrad des Ladevorgangs deutlich verkleinern. Diese Erwärmung ist proportional zum Quadrat der erzeugten Feldstärke. Ein Ziel bei einem kontaktlosen Ladesystem für Elektrofahrzeuge ist es daher, mit möglichst wenig Feldstärke möglichst viel Leistung zu übertragen. Dies wird durch die erfindungsgemässen Massnahmen verwirklicht.

Weitere vorteilhafte Ausgestaltungen und Weiterbildungen der Erfindung ergeben sich aus den Unteransprüchen sowie aus der Beschreibung in Zusammenschau mit den Figuren.

Vorzugsweise liegt der Kapazitätswert des ersten und zweiten Kondensators im Bereich von

$$C_{1,2} = \frac{P}{1 \cdot f \cdot U2_{DCmax}^2}$$

bis

$$C_{1,2} = \frac{P}{4 \cdot f \cdot U2_{DCmax}^2}$$

wobei P die Nennleistung der Ladeschaltung, f die Übertragungsfrequenz der Ladeschaltung und $U2_{DCmax}$ die maximale Ausgangs-Gleichspannung der Ladeschaltung angibt. Dadurch erreicht die Ladeschaltung bei gleicher Leistung und Kopplung gegenüber dem Stand der Technik eine deutlich höhere Ausgangsspannung.

Insbesondere ist es von Vorteil, wenn der Kapazitätswert des ersten und zweiten Kondensators nach der Formel

$$C_{1,2} = \frac{P}{2 \cdot f \cdot U2_{DCmax}^2}$$

berechnet wird. Dadurch erreicht die Ladeschaltung bei gleicher Leistung und Kopplung gegenüber dem Stand der Technik die doppelte Ausgangsspannung. Eine Abweichung des tatsächlich verwendeten Kapazitätswerts gegenüber dem berechneten Kapazitätswert von $\pm 10\%$ verändert die vorliegenden Verhältnisse nur geringfügig und ist daher als vom Schutzbereich mit umfasst anzusehen.

In einer günstigen Ausführungsvariante umfasst die Ladeschaltung einen zwischen einen Anschluss der Sekundärspule und einen ersten Brückenpunkt geschalteten dritten Kondensator. Dadurch wird sekundärseitig ein Schwingkreis gebildet, wodurch die Ladeschaltung insbesondere gut an Spannungsquellen betrieben werden kann.

In einer weiteren günstigen Ausführungsvariante umfasst die Ladeschaltung einen zwischen einen Anschluss einer Primärspule des Transformators und einen Anschluss eines Ladeeingangs geschalteten vierten Kondensator. Dadurch wird auch Primärseitig ein Schwingkreis gebildet, wodurch die Ladeschaltung wiederum gut an Spannungsquellen betrieben werden kann. Dies ist insbesondere bei kontaktloser Energieübertragung sehr vorteilhaft, denn so werden die für das Übertragungsfeld erforderlichen Blindleistungen von diesem Kondensator übernommen und belasten die Wechselspannungsquelle nicht.

Günstig ist es aber auch, wenn die Ladeschaltung einen parallel zur Primärspule des Transformators geschalteten vierten Kondensator umfasst. Dadurch wird anstelle des primärseitigen Serienschwingkreises ein primärseitiger Parallelschwingkreis gebildet. Dadurch ergeben sich wiederum vorteilhafte Bedingungen beim Betrieb der Ladeschaltung an einer Spannungsquelle. Insbesondere durch die Kombination aus Serien- und Parallelschaltung ergibt sich ein kapazitiver Spannungsteiler, welcher eine Reduktion des Eingangsstromes bewirkt, wodurch die Eingangsspannungsquelle in vorteilhafter Weise entlastet wird.

Vorteilhaft ist es weiterhin, wenn die Ladeschaltung einen zwischen die ersten Brückenpunkte geschalteten fünften Kondensator umfasst. Dadurch wird der Spannungssprung bei der Umkehrung der Stromrichtung vermieden beziehungsweise gemildert. In Folge werden auch die Spannungs-Oberwellen an der Sekundärspule reduziert.

Wenn die Ladeschaltung als kontaktlose Ladeschaltung ausgebildet ist, kann der die sekundärseitigen Bestandteile der Ladeschaltung aufweisende Mobilteil insbesondere die Sekundärspule des Transformators, den Brückengleichrichter, den ersten und zweiten Kondensator, einen Ladeausgang, sowie gegebenenfalls den dritten und fünften Kondensator umfassen. Findet die Ladeschaltung in einem kontaktlosen Kraftfahrzeug-Ladesystem Verwendung, so können demgemäss die Primärspule des Transformators sowie gegebenenfalls der vierte Kondensator stationär ausserhalb des Kraftfahrzeugs angeordnet sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:

Fig. 1    eine erste Ausführungsform einer erfindungsgemässen Ladeschaltung;

Fig. 2    einen zeitlichen Verlauf von Sekundärstrom und Sekundärspannung der Ladeschaltung nach Fig. 1;

Fig. 3    ein Diagramm der Ausgangsgleichspannung in Abhängigkeit vom Eingangsstrom;

Fig. 4    eine weitere Ausführungsform einer erfindungsgemässen Ladeschaltung mit Serienschwingkreisen im Primärkreis und im Sekundärkreis;

Fig. 5    noch eine weitere Ausführungsform einer erfindungsgemässen Ladeschaltung mit einem zusätzlichen Kondensator im Brückengleichrichter;

Fig. 6    die zeitlichen Verläufe von Sekundärstrom und Sekundärspannung ohne den Kondensator im Brückengleichrichter;

Fig. 7    die zeitlichen Verläufe von Sekundärstrom und Sekundärspannung mit dem Kondensator im Brückengleichrichter und

Fig. 8    ein schematisch dargestelltes Beispiel eines Ladesystems mit einem Kraftfahrzeug.

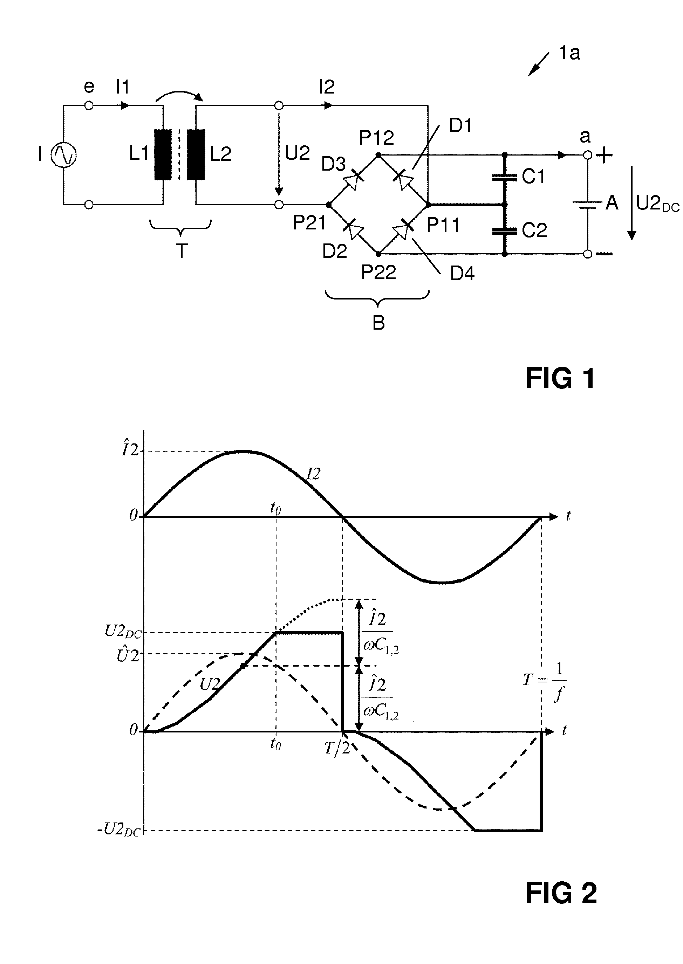

Fig. 1 zeigt eine erste Ausführungsform einer erfindungsgemässen Ladeschaltung 1 a. Die Ladeschaltung 1 a umfasst einen Transformator T mit einer Primärspule L1 und einer damit induktiv gekoppelten Sekundärspule L2, einen an der Sekundärspule L2 des Transformators T über erste gegenüberliegende Brückenpunkte P11, P21 angeschlossenen Brückengleichrichter B, welcher hier mit vier Dioden D1..D4 gebildet ist, und einen mit zweiten gegenüberliegenden Brückenpunkten P12, P22 des Brückengleichrichters B verbundenen Ladeausgang a. Zwischen einen ersten Brückenpunkt P11 und einen zweiten Brückenpunkt P12 ist zusätzlich ein erster Kondensator C1 geschaltet. Zwischen diesen ersten Brückenpunkt P11 und dem anderen zweiten Brückenpunkt P22 ist ein zweiter Kondensator C2 geschaltet.

An dem mit den zweiten Brückenpunkten P12, P22 verbundenen Ausgang a ist in diesem Beispiel ein Akkumulator A geschaltet, der zwar möglicher jedoch nicht zwingender Bestandteil der Ladeschaltung 1a ist. Darüber hinaus ist an dem mit der Primärspule L1 verbundenen Eingang e eine Stromquelle I angeschlossen, die ebenfalls möglicher aber nicht zwingender Bestandteil der Ladeschaltung 1a ist.

Die Funktion der in der Fig. 1 dargestellten Ladeschaltung 1a wird nun näher erläutert, wobei die Sekundärspule L2 für die nachfolgenden Betrachtungen als ideale Sinus-Wechselstromquelle betrachtet wird. Das heisst, der Sekundärstrom I2 verläuft sinusförmig. Weiterhin wird die Ausgangsgleichspannung $U2_{DC}$ wegen des Akkumulators A als (quasi) konstant angenommen. Die Dioden D1..D4 werden als ideal angenommen. Zum Zeitpunkt t=0 wird zudem UC1= $U2_{DC}$, UC2 =0 angenommen. Es ergeben sich somit für eine Schwingungsperiode die in der Fig. 2 dargestellten Signalformen.

Zu Beginn sperrt die Diode D1 wegen der Spannung am Kondensator C1. Ebenso sperren die Dioden D3 und D4 wegen der Richtung des Stroms I2. Der Strom I2 fliesst zu Beginn somit über die beiden Kondensatoren C1 und C2, wodurch der Kondensator C1 entladen und der Kondensator C2 geladen wird. Das Umladen der Kondensatoren C1 und C2 geschieht so lange, bis die Spannung am ersten Kondensator UC1=0 ist. Weiter kann die Spannung am ersten Kondensator C1 nicht sinken, sondern bleibt wegen der Diode D1, die zum Zeitpunkt $t_0$ zu leiten beginnt, konstant auf null. Dementsprechend bleibt die Spannung am zweiten Kondensator C2 konstant auf UC2= $U2_{DC}$. Als weitere Folge fliesst auch der Ladestrom ab dem Zeitpunkt $t_0$ nicht mehr über den Kondensator C1, sondern über die Diode D1. Bis zum Zeitpunkt t=T/2 sind die Spannungen an den Kondensatoren somit UC1= 0, UC2 = $U2_{DC}$.

Nach dem Wenden des Stroms bei t=T/2 sperren die Dioden D1 und D2. Weiterhin sperrt auch die Diode D4 da die Spannung UC2 = $U2_{DC}$ ist. Folglich fliesst der Strom I2 nun wieder über die Kondensatoren C1 und C2, wodurch der Kondensator C1 geladen und der Kondensator C2 entladen wird. Das Umladen der Kondensatoren C1 und C2 geschieht so lange, bis die Spannung am zweiten Kondensator UC2=0 ist. Weiter kann die Spannung auch am zweiten Kondensator C2 nicht sinken, sondern bleibt wegen der Diode D4, die ab diesem Zeitpunkt zu leiten beginnt, konstant auf null. Dementsprechend bleibt die Spannung am ersten Kondensator C1 konstant auf UC1= $U2_{DC}$. Als weitere Folge fliesst auch der Ladestrom nun nicht mehr über den Kondensator C2, sondern über die Diode D4. Bis zum Zeitpunkt t=T, an dem der Zyklus von Neuem beginnt, sind die Spannungen an den Kondensatoren somit UC1= $U2_{DC}$, UC2 = 0.

In der Fig. 2 sind nicht die Spannungen UC1 und UC2 direkt dargestellt, sondern die Spannung U2. In der ersten Halbperiode entspricht die Spannung U2 der Spannung UC2, in der zweiten Halbperiode der negativen Spannung UC1.

Durch die Kondensatoren C1, C2 ergibt sich gegenüber einer reinen Ladeschaltung mit nur einem Gleichrichter B nun eine tiefere effektive Lastspannung U2, wie aus der Fig. 2 deutlich hervorgeht. Die Kondensatoren C1, C2 sind dabei vor allem bei grossen Ausgangsspannungen $U2_{DC}$ wirksam, bei kleiner Ausgangsspannung $U2_{DC}$ werden diese jedoch schnell umgeladen und reduzieren die effektive Lastspannung U2 somit weniger. Dadurch wird das Verhältnis von Maximalwert zu Minimalwert der Spannung U2 gegenüber dem Verhältnis von Maximalwert zu Minimalwert der Ausgangsgleichspannung $U2_{DC}$ reduziert. Im Endeffekt erreicht die Ladeschaltung 1a bei gleicher Leistung und Kopplung gegenüber dem Stand der Technik dadurch höhere Ausgangsspannungen $U2_{DC}$.

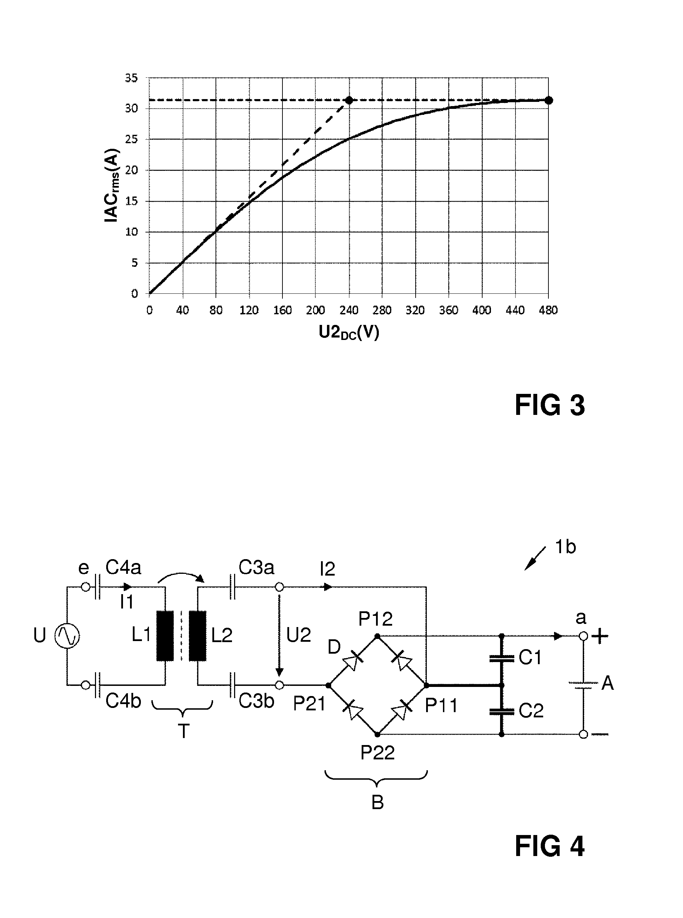

Die Fig. 3 zeigt dazu ein beispielhaftes Diagramm der Ausgangsgleichspannung $U2_{DC}$ in Abhängigkeit vom Eingangsstrom I1 beziehungsweise $IAC_{rms}$. in einem induktiven Übertragungssystem mit schwacher Kopplung. Strichliert mit kurzen Strichen ist dabei der Nennstrom der Stromquelle I (respektive einer Spannungsquelle U), strichliert mit langen Strichen ein Verlauf einer Ladeschaltung nur mit einem Gleichrichter B (und ohne Kondensatoren C1 und C2) und schliesslich durchgezogen der Verlauf der vorgestellten Ladeschaltung 1a dargestellt. Deutlich zu sehen ist, dass sich die Ladeschaltung 1a bei tiefen Ausgangsgleichspannung $U2_{DC}$ zunächst wie eine Ladeschaltung ohne Kondensatoren C1 und C2 verhält, diese also keinen oder nur geringen Einfluss haben. Mit zunehmender Ausgangsgleichspannung $U2_{DC}$ verstärkt sich jedoch der Einfluss der Kondensatoren C1 und C2, und der Verlauf der Ausgangsgleichspannung $U2_{DC}$ über dem Eingangsstrom I1 weicht immer mehr von einer Ladeschaltung nach dem Stand der Technik ab. Bei gleichem Eingangsstrom I1 erreicht die Ladeschaltung 1 a im dargestellten Beispiel gegenüber einer herkömmlichen Ladeschaltung die doppelte Ausgangsspannungen $U2_{DC}$.

Dieser Fall tritt dann ein, wenn der Kapazitätswert des ersten und zweiten Kondensators C1, C2 nach der Formel

$$C_{1,2} = \frac{P}{2 \cdot f \cdot U2_{DCmax}^2}$$

berechnet wird, wobei P die Nennleistung der Ladeschaltung 1, 1a..1c, f die Übertragungsfrequenz der Ladeschaltung 1, 1a..1c und $U2_{DCmax}$ die maximale Ausgangs-Gleichspannung der Ladeschaltung 1, 1a.. 1c angibt.

Insbesondere ist durch diese Wahl des Kapazitätswertes bei der Leistung P und einer Sekundärspannung U2 < $U2_{DCmax}$ gewährleistet, dass bei jeder Vollwelle der Transformatorspannung sowohl alle Dioden D1..D4, als auch die Kondensatoren C1, C2 einen Teil des Ladestromes führen. Erst wenn U2 den Wert $U2_{DCmax}$ erreicht oder überschreitet, fliesst durch die zu den Kondensatoren C1, C2 parallel geschalteten Dioden D1, D4 kein Strom mehr, und die Ladeschaltung 1, 1a..1c wirkt als reine, aus der Literatur an sich bekannte, Spannungs-Verdopplerschaltung.

Selbstverständlich ist eine Verdopplung der Ausgangsspannung $U2_{DC}$ nicht zwingend für die Erfindung. Eine Kompensation dieser Verdoppelung kann zum Beispiel durch eine Halbierung der sekundären Windungszahl des Transformators T erfolgen, entsprechend verschieben sich die Kurven nach links. Nach wie vor ist der Ausgangsspannungsbereich bei begrenztem Eingangsstrom I1 mit der erfindungsgemässen Schaltung 1a aber doppelt so gross wie ohne diese.

Generell ist der Einfluss der Kondensatoren C1 und C2 auf die Ladeschaltung 1 a umso grösser je grösser deren Kapazitätswert ist. Grosse Kondensatoren C1 und C2 führen daher zu einer stärkeren Anhebung der Ausgangsspannung $U2_{DC}$ als kleine Kondensatoren C1 und C2. Im Allgemeinen ist es von Vorteil, wenn der Kapazitätswert des ersten und zweiten Kondensators C1, C2 im Bereich von

$$C_{1,2} = \frac{P}{1 \cdot f \cdot U2_{DCmax}^2}$$

bis

$$C_{1,2} = \frac{P}{4 \cdot f \cdot U2_{DCmax}^2}$$

liegt.

Die Fig. 4 zeigt nun eine weitere Ausführungsform einer Ladeschaltung 1 b, welcher der in Fig. 1 dargestellten Ladeschaltung 1a sehr ähnlich ist. Zusätzlich umfasst diese jedoch einen zwischen einen Anschluss der Sekundärspule L2 und einen ersten Brückenpunkt P11 geschalteten dritten Kondensator C3a und einen zwischen den anderen Anschluss der Sekundärspule L2 und dem anderen ersten Brückenpunkt P21 geschalteten dritten Kondensator C3b. Denkbar wäre auch, dass anstelle der beiden dritten Kondensatoren C3a und C3b ein einziger grösserer Kondensator zwischen einen Anschluss der Sekundärspule L2 und einen ersten Brückenpunkt P11, P21 geschaltet ist.

Darüber hinaus umfasst die Ladeschaltung 1 b einen zwischen einen Anschluss der Primärspule L1 des Transformators T und einen Anschluss des Ladeeingangs e geschalteten vierten Kondensator C4a und einen zwischen den anderen Anschluss der Primärspule L1 des Transformators T und den anderen Anschluss des Ladeeingangs e geschalteten vierten Kondensator C4b. Auch hier wäre denkbar, dass anstelle der beiden vierten Kondensatoren C4a und C4b ein einziger grösserer Kondensator zwischen einen Anschluss einer Primärspule L1 des Transformators T und einen Anschluss des Ladeeingangs e geschaltet ist.

Dadurch wird primärseitig und sekundärseitig ein Serienschwingkreis gebildet, wodurch die Ladeschaltung 1 b insbesondere gut an einer Spannungsquelle U betrieben werden kann, so wie dies in der Fig. 4 dargestellt ist. Dies ist insbesondere bei kontaktloser Energieübertragung sehr vorteilhaft, denn so werden die für das Übertragungsfeld erforderlichen Blindleistungen von diesem Kondensator übernommen und belasten die Wechselspannungsquelle U nicht. Trotz Verwendung der Spannungsquelle U wirkt die Schaltung am Brückeneingang (also an den Brückenpunkten P11 und P21) wiederum als Stromquelle, wodurch der Sekundärstrom I2 sinusförmig verläuft und sich die in Fig. 2 und 3 dargestellten Verhältnisse ergeben.

In diesem Zusammenhang wäre es auch vorstellbar, dass anstelle des primärseitigen Serienschwingkreis ein Parallelschwingkreis vorgesehen wird. Dazu wird anstelle der Kondensatoren C4a, C4b ein vierten Kondensator parallel zur Primärspule L1 des Transformators T geschaltet. Insbesondere durch die Kombination aus Serien- und Parallelschaltung ergibt sich ein kapazitiver Spannungsteiler, welcher eine Reduktion des Eingangsstromes I1 bewirkt, wodurch die Eingangsspannungsquelle U in vorteilhafter Weise entlastet wird.

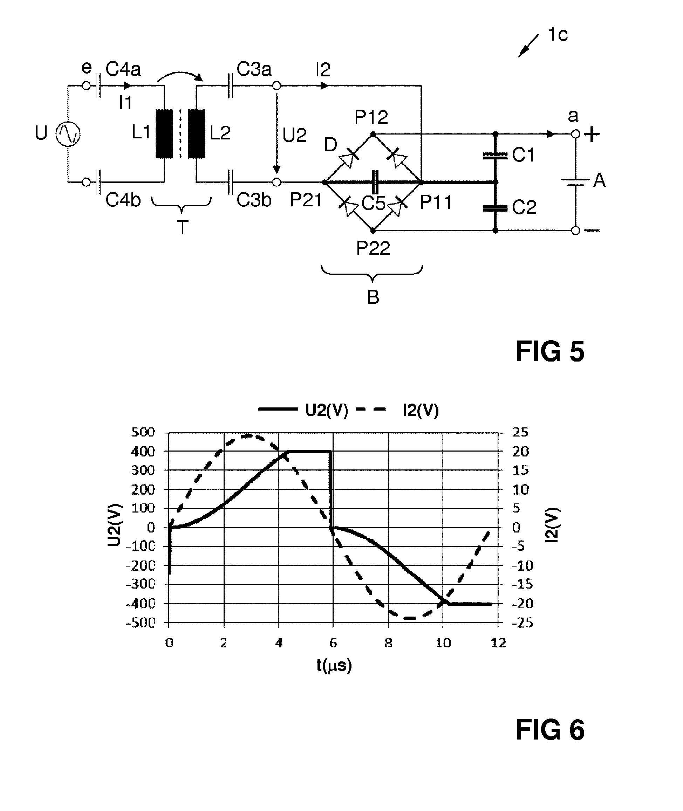

Die Fig. 5 zeigt nun noch eine weitere Ausführungsform einer Ladeschaltung 1 c, welcher der in Fig. 2 dargestellten Ladeschaltung 1 b sehr ähnlich ist. Zusätzlich umfasst diese jedoch einen zwischen die ersten Brückenpunkte P11, P21 geschalteten fünften Kondensator C5. Dadurch wird der Spannungssprung bei der Umkehrung der Stromrichtung des Stroms I2 vermieden beziehungsweise gemildert. In Folge werden auch die Spannungs-Oberwellen an der Sekundärspule L2 reduziert.

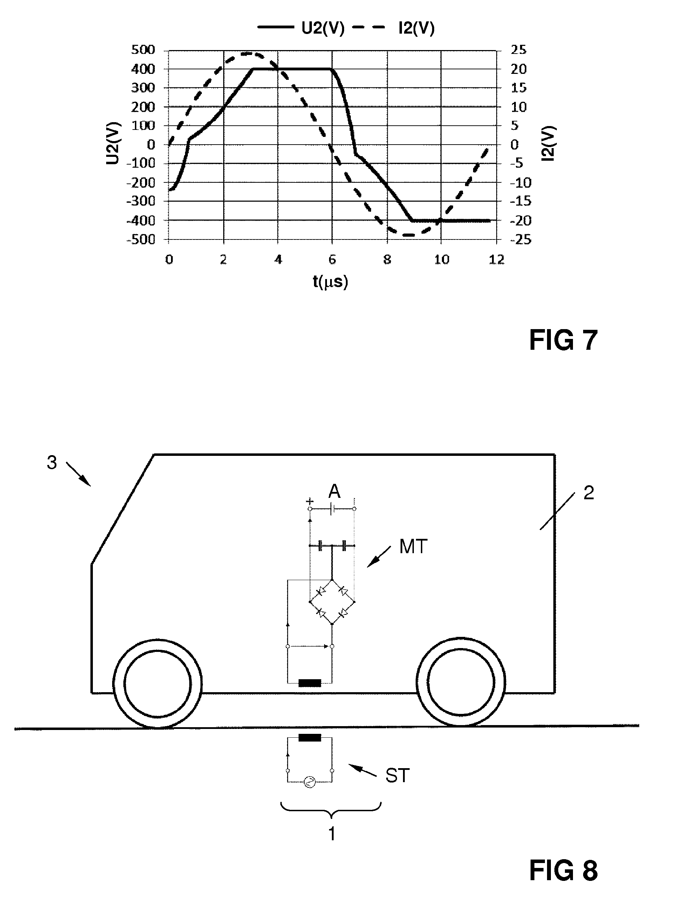

Die Fig. 6 zeigt dazu die zeitlichen Verläufe von Sekundärstrom I2 und Sekundärspannung U2 ohne den fünften Kondensator C5 im Brückengleichrichter B (vergleiche auch Fig. 2), und Fig. 7 zeigt die zeitlichen Verläufe von Sekundärstrom I2 und Sekundärspannung U2 mit dem fünften Kondensator C5 im Brückengleichrichter B. Aus der Fig. 7 ist erkennbar, dass der in Fig. 6 noch auftretende Spannungssprung beim Wenden des Stroms I2 nun nicht mehr auftritt. Selbstverständlich kann der fünfte Kondensator C5 auch in einer Ladeschaltung 1a nach Fig. 1 eingesetzt werden.

Fig. 8 zeigt nun ein Kraftfahrzeug 2, welches die sekundärseitigen Bestandteile einer Ladeschaltung 1 (also den Mobilteil MT) umfasst sowie einen mit dem Ladeausgang a der Ladeschaltung 1 verbundenen Akkumulator A, welcher zumindest teilweise dem Antrieb des Kraftfahrzeugs 2 dient. Konkret umfasst das Kraftfahrzeug 2 die Sekundärspule L2 des Transformators T, den Brückengleichrichter B, den ersten und zweiten Kondensator C1, C2, den mit dem Ladeausgang a verbundenen Akkumulator A sowie gegebenenfalls den dritten und fünften Kondensator C3a, C3b, C5.

Mit den die primärseitigen Bestandteile der Ladeschaltung 1, welche stationär ausserhalb dieses Kraftfahrzeugs 2 angeordnet sind (also mit dem Stationärteil ST der Ladeschaltung 1) ergibt sich ein Ladesystem 3. Konkret sind die Primärspule L1 des Transformators T sowie gegebenenfalls der vierte Kondensator C4a, C4b stationär ausserhalb des Kraftfahrzeugs 2 angeordnet.

Bei einer Verwendung der vorgestellten Ladeschaltung 1, 1a..1c in einem Ladesystem 3 für Kraftfahrzeuge 2 treten die Vorteile der Erfindung besonders hervor, da die Kopplung zwischen Primärspule L1 und Sekundärspule L2 einerseits nicht beliebig gesteigert werden kann, andererseits je nach Position des Fahrzeugs 2 zur Primärspule L1 variieren kann.

Beim induktiven Laden von Elektrofahrzeugen über im Boden befindliche Induktionsschleifen können generell zwei Kategorien unterschieden werden, nämlich das stationäre Laden des parkenden Fahrzeugs und das mobile Laden während der Fahrt über in der Fahrbahn verlegte Induktionsleitungen. Über Induktionswicklung im Boden (Primärspule L1) wird ein magnetisches Wechselfeld im Frequenzbereich 25...150kHz (vorzugsweise mit 85kHz) erzeugt, sobald das System ein ladebereites Kraftfahrzeug 2 erkennt. Ein Teil dieses Feldes durchdringt eine "Empfängerspule" (Sekundärspule L2) im Fahrzeug 2 und ermöglicht so eine kontaktlose Energieübertragung wie in einem Transformator T.

Generell ist eine kontaktlos ausgebildete Ladeschaltung 1, 1 a..1 c nicht an die Anwendung bei einem Kraftfahrzeug 2 gebunden, sondern kann ganz allgemein eingesetzt werden. Die Ladeschaltung 1, 1a..1c weist dann einen die sekundärseitigen Bestandteile der Ladeschaltung 1, 1a..1c umfassenden Mobilteil MT sowie einen vom Mobilteil MT getrennten, die primärseitigen Bestandteile der Ladeschaltung 1, 1 a..1 c umfassenden Stationärteil ST auf. Der Mobilteil muss nicht zwingend einen Akkumulator A umfassen, sondern kann die Sekundärspule L2 des Transformators T, den Brückengleichrichter B, den ersten und zweiten Kondensator C1, C2, den (freien) Ladeausgang a, sowie gegebenenfalls den dritten und fünften Kondensator C3a, C3b, C5 umfassen.

Abschliessend wird angemerkt, dass die Ladeschaltung 1, 1a..1c in der Realität auch mehr Bauteile als dargestellt umfassen kann. Weiterhin wird angemerkt, dass sich die obigen Ausgestaltungen und Weiterbildungen der Erfindung auf beliebige Art und Weise kombinieren lassen.

**Bezugszeichenliste**

| | |
|---|---|
| 1, 1a..1c | Ladeschaltung |
| 2 | Kraftfahrzeug |
| 3 | Ladesystem |
| A | Akkumulator |
| a | Ausgang |
| B | Brückengleichrichter |
| C1..C5 | Kondensator |
| D, D1..D4 | Diode |
| e | Eingang |
| f | Frequenz |
| I | Strom / Stromquelle |
| I1, IAC | Primärstrom |
| I2 | Sekundärstrom |
| L1 | Primärspule |
| L2 | Sekundärspule |
| MT | Mobilteil |
| P11..P22 | Brückenpunkt |
| ST | Stationärteil |
| T | Transformator |
| t | Zeit |
| T | Periodendauer |
| U | Spannung / Spannungsquelle |
| U2 | Sekundärspannung |
| U2$_{DC}$ | Ausgangsgleichspannung |
| ω | Kreisfrequenz |

**Patentansprüche**

1. Ladeschaltung (1, 1a..1c) für einen Akkumulator (A), umfassend

   - einen Transformator (T);
   - einen an einer Sekundärspule (L2) des Transformators (T) über erste gegenüberliegende Brückenpunkte (P11, P21) angeschlossenen Brückengleichrichter (B) und
   - einen mit zweiten gegenüberliegenden Brückenpunkten (P12, P22) des Brückengleichrichters (B) verbundenen Ladeausgang (a),

   **gekennzeichnet durch**
   einen zwischen einen ersten Brückenpunkt (P11) und einen zweiten Brückenpunkt (P12) geschalteten ersten Kondensator (C1) und einen zwischen diesen ersten Brückenpunkt (P11) und den anderen zweiten Brückenpunkt (P22) geschalteten zweiten Kondensator (C2).

2. Ladeschaltung (1, 1a..1c) nach Anspruch 1, **dadurch gekennzeichnet, dass** der Kapazitätswert des ersten und zweiten Kondensators (C1, C2) im Bereich von

$$C_{1,2} = \frac{P}{1 \cdot f \cdot U2_{DCmax}^2}$$

   bis

$$C_{1,2} = \frac{P}{4 \cdot f \cdot U2_{DCmax}^2}$$

   liegt, wobei P die Nennleistung der Ladeschaltung (1, 1a..1c), f die Übertragungsfrequenz der Ladeschaltung (1, 1a..1c) und U2$_{DCmax}$ die maximale Ausgangs-Gleichspannung der Ladeschaltung (1, 1a..1c) angibt.

3. Ladeschaltung (1, 1a..1c) nach Anspruch 2, **dadurch gekennzeichnet, dass** der Kapazitätswert des ersten und zweiten Kondensators (C1, C2) nach der Formel

$$C_{1,2} = \frac{P}{2 \cdot f \cdot U2_{DCmax}^2}$$

   berechnet wird.

4. Ladeschaltung (1, 1a..1c) einem der Ansprüche 1 bis 3, **gekennzeichnet durch** einen zwischen einen Anschluss der Sekundärspule (L2) und einen ersten Brückenpunkt (P11, P21) geschalteten dritten Kondensator (C3a, C3b).

5. Ladeschaltung (1, 1a..1c) nach einem der Ansprüche 1 bis 4, **gekennzeichnet durch** einen zwischen einen Anschluss einer Primärspule (L1) des Transformators (T) und einen Anschluss eines Ladeeingangs (e) geschalteten vierten Kondensator (C4a, C4b).

6. Ladeschaltung (1, 1a..1c) nach einem der Ansprüche 1 bis 4, **gekennzeichnet durch** einen parallel zur Primärspule (L1) des Transformators (T) geschalteten vierten Kondensator.

7. Ladeschaltung (1, 1a..1c) nach einem der Ansprüche 1 bis 6, **gekennzeichnet durch** einen zwischen die ersten Brückenpunkte (P11, P21) geschalteten fünften Kondensator (C5).

8. Ladeschaltung (1, 1a..1c) nach einem der Ansprüche 1 bis 7, **dadurch gekennzeichnet, dass** diese kontaktlos ausgebildet ist und einen die sekundärseitigen Bestandteile der Ladeschaltung (1, 1a..1c) umfassenden Mobilteil (MT) und einen davon getrennten die primärseitigen Bestandteile der Ladeschaltung (1, 1 a..1 c) umfassenden Stationärteil (ST) umfasst.

9. Mobilteil (MT) **gekennzeichnet durch** die sekundärseitigen Bestandteile (MT) einer Ladeschaltung (1, 1a..1c) nach Anspruch 8.

10. Mobilteil (MT) nach Anspruch 9, **gekennzeichnet durch** die Sekundärspule (L2) des Transformators (T), den Brückengleichrichter (B), den ersten und zweiten Kondensator (C1, C2), einen Ladeausgang (a), sowie gegebenenfalls den dritten und fünften Kondensator (C3a, C3b, C5).

11. Kraftfahrzeug (2), **gekennzeichnet durch** einen Mobilteil (MT) nach einem der Ansprüche 9 oder 10 sowie einen mit dem Ladeausgang (a) des Mobilteils (MT) verbundenen Akkumulator (A), welcher zumindest teilweise dem Antrieb des Kraftfahrzeugs (2) dient.

12. Kraftfahrzeug-Ladesystem (3), **gekennzeichnet durch** eine Ladeschaltung (1, 1a..1c) nach Anspruch 8 und ein Kraftfahrzeug (2) nach Anspruch 11, wobei der Stationärteil (ST) stationär ausserhalb dieses Kraftfahrzeugs (2) angeordnet ist.

13. Kraftfahrzeug-Ladesystem (3) nach Anspruch 12 **dadurch gekennzeichnet, dass** die Primärspule (L1) des Transformators (T) sowie gegebenenfalls der vierte Kondensator (C4a, C4b) stationär ausserhalb des Kraftfahrzeugs (2) angeordnet sind.

14. Verwendung eines Mobilteils (MT) nach einem der Ansprüche 9 oder 10 in einem Kraftfahrzeug (2), **dadurch gekennzeichnet, dass** der Mobilteil (MT) sowie ein mit dem Ladeausgang (a) des Mobilteils (MT) verbundener Akkumulator (A), welcher zumindest teilweise dem Antrieb des Kraftfahrzeugs (2) dient, innerhalb des Kraftfahrzeugs (2) angeordnet sind.

15. Verwendung einer Ladeschaltung (1, 1a..1c) Anspruch 8 in einem Kraftfahrzeug-Ladesystem (3) für Kraftfahrzeuge (2), **dadurch gekennzeichnet, dass** der Mobilteil (MT) sowie ein mit dem Ladeausgang (a) des Mobilteils (MT) verbundener Akkumulator (A), welcher zumindest teilweise dem Antrieb des Kraftfahrzeugs (2) dient, innerhalb des Kraftfahrzeugs (2) angeordnet sind und der Stationärteil (ST) stationär ausserhalb dieses Kraftfahrzeugs (2) angeordnet ist.

**FIG 1**

**FIG 2**

FIG 3

FIG 4

**FIG 5**

**FIG 6**

**FIG 7**

**FIG 8**

Europäisches
Patentamt

European
Patent Office

Office européen
des brevets

**EUROPÄISCHER RECHERCHENBERICHT**

Nummer der Anmeldung

EP 14 15 6254

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2013/136409 A1 (PIONEER CORP [JP]; IWAWAKI KEISUKE [JP]) 19. September 2013 (2013-09-19) | 1,4,8 | INV. H02J5/00 B60L11/18 |
| Y | * Zusammenfassung * | 2,3,7, 9-15 | G05F3/02 H02J7/02 |
| A | | 5,6 | H02J17/00 |
| | ----- | | |
| X | GB 843 843 A (PYE LTD) 10. August 1960 (1960-08-10) | 1 | |
| Y | * Spalte 1, Zeile 13 - Zeile 42; Abbildung 1 * | 7 | |
| | ----- | | |
| X | EP 0 633 652 A2 (SDS THOMSON MICROELECTRONICS [SG] SGS THOMSON MICROELECTRONICS [SG]) 11. Januar 1995 (1995-01-11) * Spalte 1, Zeile 12 - Zeile 22 * | 1 | |
| | ----- | | |
| X | US 3 046 466 A (TYRRELL PAUL C ET AL) 24. Juli 1962 (1962-07-24) | 1,4 | |
| Y | * Spalte 5, Zeile 65 - Spalte 7, Zeile 30; Abbildung 5 * | 2,3,7 | RECHERCHIERTE SACHGEBIETE (IPC) |
| | ----- | | H02J |
| X | US 2012/007435 A1 (SADA TOMOKAZU [JP] ET AL) 12. Januar 2012 (2012-01-12) | 1 | B60L G05F |
| Y | * Absatz [0123] - Absatz [0124]; Abbildungen 9a,b * | 9-15 | |
| | ----- | | |
| Y | US 2013/069440 A1 (MARUKAME TAKAO [JP] ET AL) 21. März 2013 (2013-03-21) * Absatz [0069]; Abbildung 3 * | 7 | |
| | ----- | | |
| Y | US 2011/199028 A1 (YAMAZAKI SHUNPEI [JP] ET AL) 18. August 2011 (2011-08-18) * Absatz [0275] - Absatz [0288] * | 9-15 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 3. Juli 2014 | Jonda, Sven |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................
& : Mitglied der gleichen Patentfamilie, übereinstimmendes Dokument

EPO FORM 1503 03.82 (P04C03)

| Europäisches Patentamt / European Patent Office / Office européen des brevets | **EUROPÄISCHER RECHERCHENBERICHT** | **Nummer der Anmeldung**<br>EP 14 15 6254 |

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2009/152954 A1 (LE TRIET TU [US] ET AL) 18. Juni 2009 (2009-06-18) * Absatz [0060] - Absätze [0062], [0067]; Abbildung 8 *<br><br>----- | 1 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 3. Juli 2014 | Jonda, Sven |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**      EP 14 15 6254

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-07-2014

| Im Recherchenbericht angeführtes Patentdokument | Datum der Veröffentlichung | Mitglied(er) der Patentfamilie | | Datum der Veröffentlichung |
|---|---|---|---|---|
| WO 2013136409 A1 | 19-09-2013 | KEINE | | |
| GB 843843 A | 10-08-1960 | KEINE | | |
| EP 0633652 A2 | 11-01-1995 | DE | 69415422 D1 | 04-02-1999 |
| | | DE | 69415422 T2 | 24-06-1999 |
| | | EP | 0633652 A2 | 11-01-1995 |
| | | EP | 0794477 A1 | 10-09-1997 |
| | | JP | 2913574 B2 | 28-06-1999 |
| | | JP | H07264862 A | 13-10-1995 |
| | | SG | 46395 A1 | 20-02-1998 |
| | | SG | 78333 A1 | 20-02-2001 |
| | | US | 5572415 A | 05-11-1996 |
| | | US | 5612613 A | 18-03-1997 |
| US 3046466 A | 24-07-1962 | KEINE | | |
| US 2012007435 A1 | 12-01-2012 | CN | 102474137 A | 23-05-2012 |
| | | EP | 2590299 A1 | 08-05-2013 |
| | | JP | 4971527 B2 | 11-07-2012 |
| | | US | 2012007435 A1 | 12-01-2012 |
| | | WO | 2012001956 A1 | 05-01-2012 |
| US 2013069440 A1 | 21-03-2013 | JP | 2013070454 A | 18-04-2013 |
| | | US | 2013069440 A1 | 21-03-2013 |
| US 2011199028 A1 | 18-08-2011 | CN | 102163862 A | 24-08-2011 |
| | | JP | 2011188733 A | 22-09-2011 |
| | | KR | 20110093688 A | 18-08-2011 |
| | | TW | 201203775 A | 16-01-2012 |
| | | US | 2011199028 A1 | 18-08-2011 |
| US 2009152954 A1 | 18-06-2009 | KEINE | | |

EPO FORM P0461

Für nähere Einzelheiten zu diesem Anhang : siehe Amtsblatt des Europäischen Patentamts, Nr.12/82